# EUROPEAN PATENT SPECIFICATION

(11) **EP 4 242 635 B1**
(45) Date of publication and mention of the grant of the patent: **05.11.2025**
(21) Application number: 22161272.4
(22) Date of filing: 10.03.2022
(51) Int. Cl.: G01N 21/33, G01N 21/85, H02M 3/335, H05B 41/30, G01J 3/10, G01N 21/31

(54) **PHOTOMETRIC PROCESS MEASUREMENT APPARATUS**
PHOTOMETRISCHES PROZESSMESSGERÄT
APPAREIL DE MESURE DE PROCESSUS PHOTOMÉTRIQUE

(43) Date of publication of application: 13.09.2023
(73) Proprietor: Hach Lange GmbH, 14163 Berlin (DE)
(72) Inventor: NAGGIES, Andre, 12685 Berlin (DE); LEYER, Axel, 41199 Mönchengladbach (DE)
(74) Representative: terpatent PartGmbB

(56) References cited:
- DE-A1- 102005 007 142
- US-A- 5 696 592
- JAMES W. LEWIS ET AL: "Flashlamp probe source for nanosecond spectroscopic studies in the ultraviolet", APPLIED OPTICS, vol. 26, no. 5, 1 March 1987 (1987-03-01), US, pages 949 - 953, XP055097066, ISSN: 0003-6935, DOI: 10.1364/AO.26.000949

## Description

The invention refers to a photometric process measurement arrangement with a photometric immersion probe and to a method for controlling a photometer flashlight source of the photometric process measurement arrangement.

A photometric process measurement arrangement comprises a land-based control unit and a separate photometric immersion probe being immersed into the water of a water basin. The water basin can be a part of a water treatment plant for controlling drinking water or for controlling a process step of a waste water treatment process. A typical photometric immersion probe is disclosed in DE 10 2005 007 142 A1 and comprises a spectroscopic UV light source and a corresponding photometric detector detecting at least two wavelengths for determining, for example, the concentration of nitrate and nitrite.

The UV light source is preferably a high voltage UV xenon lamp which is ignited, for example, every 20 ms with a high temporary electric energy which is accumulated and stored in an impulse energy capacitor. A typical ignition voltage is 900 V. The immersion probe is supplied with the operating voltage of a land-based control unit having a typical operating voltage level of, for example, 12 V. The immersion probe comprises an electronic flyback-converter for stepwisely increasing the voltage of the impulse energy capacitor up to the ignition voltage of 900 V. A typical voltage charging step of the electronic flyback-converter is in the range of up to 5 V. As soon as the 900 V are reached, the ignition is automatically triggered. However, in practice, the true ignition voltage differs in a range of 5 V from the target triggering voltage of exactly 900 V which can cause a relevant variation of the frequency spectrum of the electromagnetic radiation generated by the flashlight source.

Lewis et al., "Flashlamp probe source for nanosecond spectroscopic studies in the ultraviolet", Applied Optics, 26(5), 1987, discloses an arc flashlamp as a probe source for ultraviolet spectroscopic measurements and addresses the dependence of the emitted spectrum on discharge energy.

It is an object of the invention to provide a photometric process measurement arrangement and a method for controlling the photometric process measurement arrangement with an improved stability of the intensity spectrum of the electromagnetic radiation generated by the flashlight source.

This object is, according to the invention, solved with a photometric process measurement arrangement with the features of apparatus claim 1, and is solved with a method for controlling the photometric process measurement arrangement with the features of method claim 8.

The photometric process measurement arrangement according to the invention comprises a photometric immersion probe which is continuously and completely immersed into water. The immersion probe comprises a photometer flashlight source for providing photometric light impulses with a continuous optical spectrum, preferably with an optical spectrum focused on the ultraviolet spectrum for the determination of the concentration of, for example, nitrate and nitrite. Preferably, the flashlight source is a high voltage xenon lamp with a preferred ignition voltage of 500 to 1000 V.

The immersion probe comprises an impulse energy capacitor for storing the electric impulse energy. The actual amount of electrical energy stored in the impulse energy capacitor is defined by the actual electric capacitor's voltage which is determined and measured by an appropriate voltage measurement module.

The immersion probe comprises an impulse ignition switch being electrically arranged in-line and electrically between the impulse energy capacitor and the photometer flashlight source. When the impulse ignition switch is closed, the electric energy stored in the impulse energy capacitor flows to the photometer flashlight source so that a photometric light impulse with a continuous frequency spectrum is generated. In practice, a period length of charging the impulse energy capacitor and initiating a photometric light impulse is in the range of 10 to 100 ms.

The immersion probe comprises an ignition voltage memory memorizing an ignition voltage value defining the impulse energy capacitor's voltage when the ignition switch is closed to cause the flashlight source to provide a photometric light impulse. A typical ignition voltage value is in the range of 900 V, and can be, for example, exactly 900.0 V.

The immersion probe is provided with a falling-edge ignition trigger which closes the impulse ignition switch in the moment when the falling actual electric capacitor's voltage exactly equals the memorized ignition voltage value. The triggering of the impulse ignition switch and the consecutive photometric light impulse is not caused by an increasing flank of the actual electric capacitor's voltage but is exclusively caused by a decreasing flank of the actual electric capacitor's voltage.

The increasing flank of the actual electric capacitor's voltage during an energizing of the impulse energy capacitor is relatively high-angled compared to the falling flank or falling edge during a non-energizing phase. The falling actual electric capacitor's voltage is substantially caused by the self-discharge of the capacitor. Since the triggering is caused only if the actual electric capacitor's voltage is passing the ignition voltage value during a relatively low-angled falling phase of the capacitor's voltage, the true ignition voltage precision is substantially increased so that the true capacitor's ignition voltage is always within a maximum deviation range of much less than 1.0 V from the memorized ignition voltage value. As a consequence, the frequency spectrum as well as the intensity level of the photometric light impulses are very constant. In other words, the reproducibility of the flashlights generated by the photometer flashlight source is substantially improved.

Preferably, the photometric immersion probe comprises a voltage comparator comparing the actual electric capacitor's voltage with the memorized ignition voltage value. The voltage comparator preferably is an analogue electronic element which is fast and does not need any processor capacity. The ignition voltage memory is preferably defined by a constant analogue reference voltage source applied to the analog voltage comparator.

Preferably, the photometric immersion probe comprises a charge control, comprises a target charge voltage memory memorizing a charging target voltage value being higher than the memorized ignition voltage value, and comprises an electronic flyback-converter for successively and stepwisely electrically charging the impulse energy capacitor with numerous charging voltage quantums.

The charging voltage quantum is a fraction of the charging target voltage value and is typically in the range of 1 V to 20 V. The charging voltage quantum substantially depends on the supply voltage of the photometric immersion probe.

The charge controller stops the charging action when the actual capacitor's voltage reaches the charging target voltage value, so that the immersion probe control subsequently signalizes that the arrangement is ready for a photometric action. The actual capacitor's voltage slowly decreases because of the capacitor's self-discharge, and if a general impulse command had been issued, the impulse ignition switch is closed and a photometric light impulse is caused as soon as the falling actual electric capacitor's voltage equals the memorized ignition voltage value.

Preferably, the voltage difference between the memorized ignition voltage value and the memorized charging target voltage value is higher than the voltage of one charging voltage quantum. The charging voltage quantum is the voltage difference of the actual electric capacitor's voltage caused by one single electric charging quantum. Preferably, the voltage difference is higher than 200% of the charging voltage quantum to guarantee that there is enough time for preparing a photometric measurement action before the falling edge of the actual electric capacitor's voltage equals the memorized ignition voltage value.

Preferably, a land-based control unit for controlling the photometric immersion probe is provided. The land-based control unit provides a supply voltage for the photometric immersion probe of less than 100 V, preferably of less than 60 V, and typically of 12 V. The supply voltage provided by the land-based control unit can be identically with the general supply voltage of the electronics of the land-based control unit which is typically in the range of 5 to 20 V. Since the land-based control unit normally is arranged remote and with a relatively large distance of up to 100 m from the photometric immersion probe, the supply voltage loss between the land-based control unit and the photometric immersion probe can be considerable. As a consequence, an electronic flyback-converter is the first choice for reliably electrically load the impulse energy capacitor.

Preferably, the photometric immersion probe is provided with a photometric detector arrangement comprising at least two valve length-selective detection elements. Since the photometric process measurement arrangement is designed to photometrically detect at least two different wavelengths, a flashlight source with a continuous spectrum is advantageous. However, this concept makes it necessary to reliably provide a perfect lifetime consistency of the photometric spectrum generated by the photometer flashlight source.

According to the independent method claim for controlling a photometer flashlight source of a photometric process measurement arrangement according to one of the apparatus claims, the following method steps are provided:
charging the impulse energy capacitor until the actual capacitor's voltage reaches the charging target voltage value,
stopping the charging action, and
in the moment when the falling actual electric capacitor's voltage equals the memorized ignition voltage value: the falling-edge ignition trigger closing the impulse ignition switch to thereby initiate a photometric light impulse generated by the flashlight source.

An embodiment of the invention is explained with reference to the enclosed drawings, wherein
figure 1 schematically shows a photometric process measurement arrangement with a photometric immersion probe, and
figure 2 shows a diagram of the actual electric capacitor's voltage U versus time of a final charging phase and the ignition of the photometer flashlight source of the photometric process measurement arrangement of figure 1.

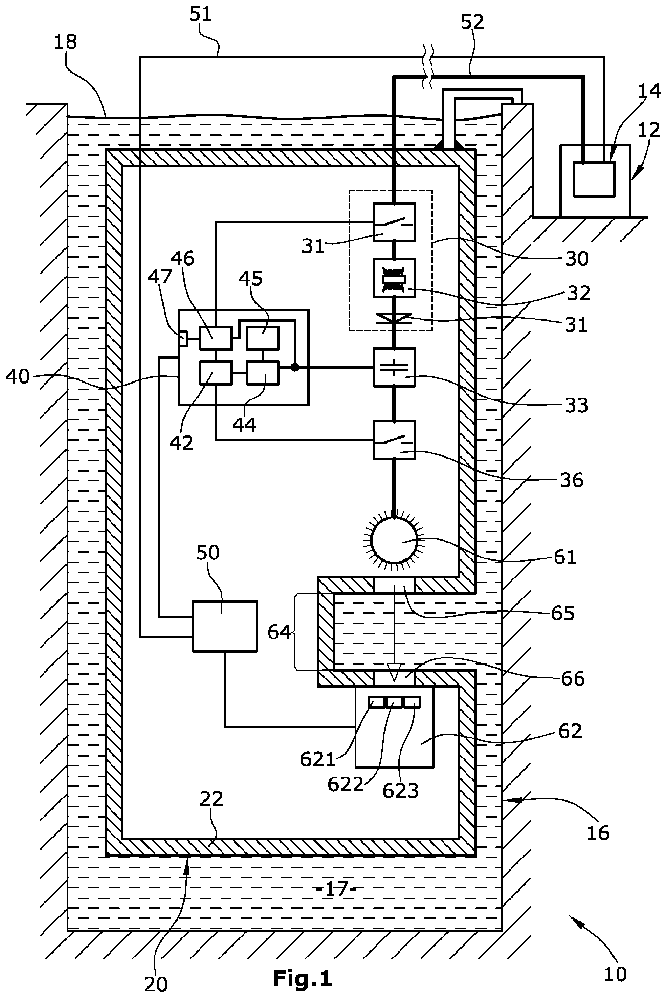

Figure 1 schematically shows a photometric process measurement arrangement 10 substantially consisting of a land-based control unit 12 and a photometric immersion probe 20 being arranged remote from the land-based control unit 12 and being arranged below a water surface 18 and completely immersed into water 17 of a water basin 16. The water basin 16 can be a part of a wastewater treatment plant. The photometric process measurement arrangement 10 determines the concentration of nitrite and nitrate in the water 17.

The photometric immersion probe 20 comprises, within a fluidtight probe housing 22, a photometer flashlight source 61 and a photometric detector arrangement 62 with three different photometric detector elements 621, 622, 623 with three different detection wavelengths. The photometer flashlight source 61 and the photometric detector arrangement 62 together define a photometer device for detecting the light absorption of a water sample in a photometric measuring section 64 defined between a light inlet window 65 and a light outlet window 66.

Alternatively, the probe 20 could be used in a laboratory by means of a suitable adapter fluidically closing the photometric measuring section 64 which is fed with the water by a suitable water feeding arrangement.

The photometric immersion probe 20 also comprises an electronic flyback-converter 30 for generating charging voltage quantums Uq, comprises an impulse energy capacitor 33 having an actual electric capacitor's voltage U and accumulating the charging voltage quantums Uq, comprises an impulse ignition switch 36, comprises an electronic charging and ignition control unit 40 for controlling the flyback-converter 30, the impulse energy capacitor 33 and the ignition switch 36, and comprises an electronic probe control 50 for controlling the photometric detector 62, the ignition control 40 and the communication with a control electronics 14 of the land-based control unit 12 via a signal line 51.

The flyback-converter 30 of the immersion probe 20 is supplied with electric energy having a nominal supply voltage Un of 12 V which is provided by the land-based control unit 12 via an electric supply line 52. Due to a considerable length of the electric supply line 52, the effective supply voltage Ue at the flyback-converter 30 can be substantially reduced and can be about 10 V, or even can be less than 10 V. Therefore, a so-called flyback-converter 30 is the first choice for charging the impulse energy capacitor 33 with the required ignition voltage of 900 V. The flyback-converter 30 comprises a converter switch 31, a transformer 32 and a blocking diode 31. The converter switch 31 is opened and closed with a switching rate of, for example, 20 kHz. A totally empty impulse energy capacitor 33 is loaded with about 200 charging voltage quantums Uq of a few Volts each, which results in a total charging duration of about 10 ms.

The charging process for charging the impulse energy capacitor 33 and the ignition of the flashlight source 61 is controlled by the ignition control 40. The ignition control 40 comprises a charge control 46 for controlling the flyback-converter 30, comprises a target charge voltage memory 47 memorizing a charging target voltage value Ut, comprises a voltage comparator 44 for comparing the actual electric capacitor's voltage U with a memorized ignition voltage value Ui, comprises an ignition voltage memory 45 memorizing the ignition voltage value Ui, and comprises a falling-edge ignition trigger 42 controlling the ignition switch 36. The control of the immersion probe 20 and the communication with the land-based control unit is provided by an electronic probe control 50.

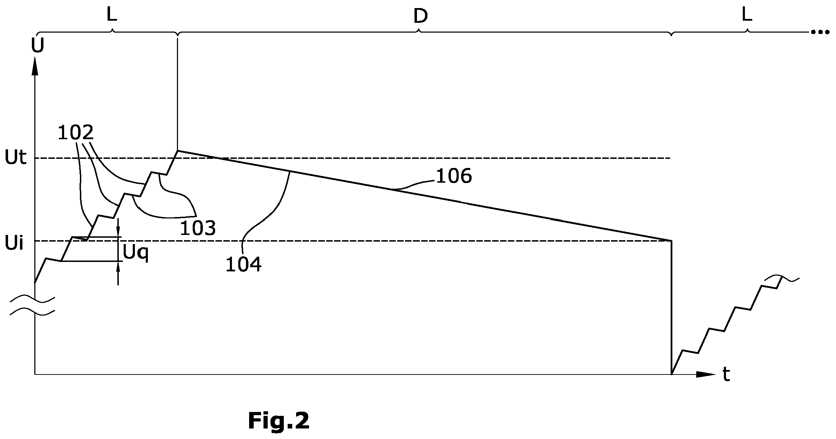

The final phase of the charging sequence L being substantially controlled by the charge control 46 is shown in figure 2. As figure 2 shows, the actual electric capacitor's voltage U is increased stepwisely with numerous charging voltage quantums Uq defining charging quantum steps 102. After each charging quantum step 102 and before the following charging quantum step 102, the actual electric capacitor's voltage minimally decreases due to an unavoidable self-discharge of the capacitor 33 in a self-discharge step 103. The self-discharge steps 103 are relatively flat-angled compared to the charging quantum steps 102 which are relatively high-angled.

As soon as the charge control 46 detects that the actual electric capacitor's voltage U has exceeded the target charge voltage value Ut of, for example, 910 V, the loading action is stopped so that the actual electric capacitor's voltage U subsequently slowly decreases in a final self-discharge phase D due to the capacitor's self-discharge, as shown in figure 2 with reference numeral 104.

In the final self-discharge phase D, the falling-edge ignition trigger 42 can be activated by the probe control 50, so that the ignition voltage operator 44 continuously compares the actual electric capacitor's voltage U with the memorized ignition voltage value Ui. As soon as the actual electric capacitor's voltage U equals the memorized ignition voltage value Ui of exactly 900.0 V, the falling-edge ignition trigger 42 closes the ignition switch 36 so that the flashlight source 61 generates a photometric light impulse with a continuous frequency spectrum. The ignition moment is shown in figure 2 with reference numeral 106.

The wavelength-selective light intensity values received by the photometric detector 62 are signalized by the probe control 50 to the land-based control unit 12, and a new charging sequence L is started.

Since the triggering of the ignition switch 36 is based on the comparison of a very slowly decreasing actual electric capacitor's voltage U with the memorized ignition voltage value Ui, the true ignition voltage is always met with a very high accuracy so that the frequency spectrum generated by the flashlight source 61 is constant over the probe's lifetime.

## Claims

1. A photometric process measurement arrangement (10) with a photometric immersion probe (20),
the photometric immersion probe (20) comprising:
a photometer flashlight source (61) for providing photometric light impulses with a continuous spectrum,
an impulse energy capacitor (33) for storing electric impulse energy and having an actual electric capacitor's voltage (U),
an impulse ignition switch (36) electrically arranged between the impulse energy capacitor (33) and the photometer flashlight source (61),
an ignition voltage memory (45) memorizing an ignition voltage value (Ui),
a charge control (46) for controlling the charging of the impulse energy capacitor (33) to a voltage above the ignition voltage value (Ui), and
a falling-edge ignition trigger (42) which closes the impulse ignition switch (36) in the moment when the falling actual electric capacitor's voltage (U) due to the capacitor's self-discharge equals the memorized ignition voltage value (Ui),
so that the flashlight source (61) generates a photometric light impulse with a continuous spectrum.

2. The photometric process measurement arrangement (10) of claim 1, wherein the photometric immersion probe (20) comprises a voltage comparator (44) comparing the actual electric capacitor's voltage (U) with the memorized ignition voltage value (Ui).

3. The photometric process measurement arrangement (10) of claim 1 or 2, wherein the photometric immersion probe (20) comprises a charge control (46), a target charge voltage memory (47) memorizing a charging target voltage value (Ut) being higher than the memorized ignition voltage value (Ui), and an electronic flyback-converter (30) for successively electrically charging the impulse energy capacitor (33) with numerous charging voltage quantums (Uq), each charging voltage quantum (Uq) being a fraction of the charging target voltage value (Ut), whereas the charge control (46) stops the charging action when the actual capacitor's voltage (U) reaches the charging target voltage value (Ut).

4. The photometric process measurement arrangement (10) of one of the preceding claims, wherein the difference between the memorized ignition voltage value (Ui) and the memorized charging target voltage value (Ut) is higher than the voltage of one charging voltage quantum (Uq).

5. The photometric process measurement arrangement (10) of one of the preceding claims, wherein a land-based control unit (12) for controlling the photometric immersion probe (28) is provided, whereas the land-based control unit (12) provides a supply voltage (Us) for the photometric immersion probe (28) of less than 100 V, preferably of less than 60 V.

6. The photometric process measurement arrangement (10) of one of the preceding claims, wherein the flashlight source (61) is a high voltage xenon lamp.

7. The photometric process measurement arrangement (10) of one of the preceding claims, wherein the photometric immersion probe (28) is provided with a photometric detector arrangement (62) comprising at least two wavelength-selective detection elements (621, 622, 623).

8. A method for controlling a photometer flashlight source (61) of a photometric process measurement arrangement (10) with the features of one of the preceding claims, with the method steps:
charging the impulse energy capacitor (33) until the actual capacitor's voltage (U) reaches the charging target voltage value (Ut),
stopping the charging action, and
in the moment when the falling actual electric capacitor's voltage (U) equals the memorized ignition voltage value (Ui): closing the impulse ignition switch (36) by the falling-edge iginition trigger (42) to thereby initiate a photometric light impulse generated by the flashlight source (61).

## Patentansprüche

1. Photometrische Prozessmessanordnung (10) mit einer photometrischen Immersionssonde (20),
wobei die photometrische Immersionssonde (20) umfasst:
eine Photometer-Blitzlichtquelle (61) zum Bereitstellen von photometrischen Lichtimpulsen mit einem kontinuierlichen Spektrum,
einen Impulsenergie-Kondensator (33) zum Speichern von elektrischer Impulsenergie und mit einer elektrischen Ist-Kondensatorspannung (U),
einen Impulszündschalter (36), der elektrisch zwischen dem Impulsenergie-Kondensator (33) und der Photometer-Blitzlichtquelle (61) angeordnet ist,
einen Zündspannungsspeicher (45), der einen Zündspannungswert (Ui) speichert,
eine Ladesteuerung (46) zum Steuern des Ladens des Impulsenergie-Kondensators (33) auf eine Spannung über dem Zündspannungswert (Ui), und
einen Fallflanken-Zündauslöser (42), der den Impulszündschalter (36) in dem Moment schließt, in dem die fallende elektrische Ist-Kondensatorspannung (U) aufgrund der Selbstentladung des Kondensators gleich dem gespeicherten Zündspannungswert (Ui) ist,
so dass die Blitzlichtquelle (61) einen photometrischen Lichtimpuls mit einem kontinuierlichen Spektrum erzeugt.

2. Photometrische Prozessmessanordnung (10) nach Anspruch 1, wobei die photometrische Immersionssonde (20) einen Spannungskomparator (44) umfasst, der die elektrische Ist-Kondensatorspannung (U) mit dem gespeicherten Zündspannungswert (Ui) vergleicht.

3. Photometrische Prozessmessanordnung (10) nach Anspruch 1 oder 2, wobei die photometrische Immersionssonde (20) eine Ladesteuerung (46), einen Zielladespannungsspeicher (47), der einen Ladeziel-Spannungswert (Ut) speichert, der höher als der gespeicherte Zündspannungswert (Ui) ist, und einen elektronischen Sperrwandler (30) zum sukzessiven elektrischen Laden des Impulsenergie-Kondensators (33) mit zahlreichen Ladespannungsquanten (Uq) umfasst, wobei jedes Ladespannungsquantum (Uq) ein Bruchteil des Ladeziel-Spannungswerts (Ut) ist, wobei die Ladesteuerung (46) den Ladevorgang stoppt, wenn die Ist-Kondensatorspannung (U) den Ladeziel-Spannungswert (Ut) erreicht.

4. Photometrische Prozessmessanordnung (10) nach einem der vorhergehenden Ansprüche, wobei die Differenz zwischen dem gespeicherten Zündspannungswert (Ui) und dem gespeicherten Ladeziel-Spannungswert (Ut) höher als die Spannung eines Ladespannungsquantums (Uq) ist.

5. Photometrische Prozessmessanordnung (10) nach einem der vorhergehenden Ansprüche, wobei eine landgestützte Steuereinheit (12) zum Steuern der photometrischen Immersionssonde (28) vorgesehen ist, wobei die landgestützte Steuereinheit (12) eine Versorgungsspannung (Us) für die photometrische Immersionssonde (28) von weniger als 100 V, vorzugsweise von weniger als 60 V, bereitstellt.

6. Photometrische Prozessmessanordnung (10) nach einem der vorhergehenden Ansprüche, wobei die Blitzlichtquelle (61) eine Hochspannungs-Xenonlampe ist.

7. Photometrische Prozessmessanordnung (10) nach einem der vorhergehenden Ansprüche, wobei die photometrische Immersionssonde (28) mit einer photometrischen Detektoranordnung (62) versehen ist, die mindestens zwei wellenlängenselektive Detektionselemente (621, 622, 623) umfasst.

8. Verfahren zum Steuern einer Photometer-Blitzlichtquelle (61) einer photometrischen Prozessmessanordnung (10) mit den Merkmalen eines der vorhergehenden Ansprüche, mit den Verfahrensschritten:
Laden des Impulsenergie-Kondensators (33), bis die Ist-Kondensatorspannung (U) den Ladeziel-Spannungswert (Ut) erreicht,
Stoppen des Ladevorgangs, und
in dem Moment, in dem die fallende elektrische Ist-Kondensatorspannung (U) gleich dem gespeicherten Zündspannungswert (Ui) ist: Schließen des Impulszündschalters (36) durch den Fallflanken-Zündauslöser (42), um dadurch einen photometrischen Lichtimpuls auszulösen, der von der Blitzlichtquelle (61) erzeugt wird.

## Revendications

1. Agencement de mesure de processus photométrique (10) avec une sonde d'immersion photométrique (20),
la sonde d'immersion photométrique (20) comprenant :
une source de lumière de flash de photomètre (61) pour fournir des impulsions de lumière photométriques avec un spectre continu,
un condensateur d'énergie d'impulsion (33) pour stocker de l'énergie d'impulsion électrique et ayant une tension de condensateur électrique réelle (U),
un commutateur d'allumage d'impulsion (36) agencé électriquement entre le condensateur d'énergie d'impulsion (33) et la source de lumière de flash de photomètre (61),
une mémoire de tension d'allumage (45) mémorisant une valeur de tension d'allumage (Ui),
une commande de charge (46) pour commander la charge du condensateur d'énergie d'impulsion (33) à une tension supérieure à la valeur de tension d'allumage (Ui), et
un déclencheur d'allumage de front descendant (42) qui ferme le commutateur d'allumage d'impulsion (36) au moment où la tension de condensateur électrique réelle descendante (U) due à l'autodécharge du condensateur est égale à la valeur de tension d'allumage mémorisée (Ui),
de sorte que la source de lumière de flash (61) génère une impulsion de lumière photométrique avec un spectre continu.

2. Agencement de mesure de processus photométrique (10) selon la revendication 1, dans lequel la sonde d'immersion photométrique (20) comprend un comparateur de tension (44) comparant la tension de condensateur électrique réelle (U) avec la valeur de tension d'allumage mémorisée (Ui).

3. Agencement de mesure de processus photométrique (10) selon la revendication 1 ou 2, dans lequel la sonde d'immersion photométrique (20) comprend une commande de charge (46), une mémoire de tension de charge cible (47) mémorisant une valeur de tension cible de charge (Ut) qui est supérieure à la valeur de tension d'allumage mémorisée (Ui), et un convertisseur à transfert indirect électronique (30) pour charger électriquement successivement le condensateur d'énergie d'impulsion (33) avec de nombreux quantums de tension de charge (Uq), chaque quantum de tension de charge (Uq) étant une fraction de la valeur de tension cible de charge (Ut), tandis que la commande de charge (46) arrête l'action de charge lorsque la tension de condensateur réelle (U) atteint la valeur de tension cible de charge (Ut).

4. Agencement de mesure de processus photométrique (10) selon l'une des revendications précédentes, dans lequel la différence entre la valeur de tension d'allumage mémorisée (Ui) et la valeur de tension cible de charge mémorisée (Ut) est supérieure à la tension d'un quantum de tension de charge (Uq).

5. Agencement de mesure de processus photométrique (10) selon l'une des revendications précédentes, dans lequel une unité de commande terrestre (12) pour commander la sonde d'immersion photométrique (28) est prévue, tandis que l'unité de commande terrestre (12) fournit une tension d'alimentation (Us) pour la sonde d'immersion photométrique (28) inférieure à 100 V, de préférence inférieure à 60 V.

6. Agencement de mesure de processus photométrique (10) selon l'une des revendications précédentes, dans lequel la source de lumière de flash (61) est une lampe au xénon haute tension.

7. Agencement de mesure de processus photométrique (10) selon l'une des revendications précédentes, dans lequel la sonde d'immersion photométrique (28) est pourvue d'un agencement de détecteur photométrique (62) comprenant au moins deux éléments de détection sélectifs en longueur d'onde (621, 622, 623).

8. Procédé de commande d'une source de lumière de flash de photomètre (61) d'un agencement de mesure de processus photométrique (10) avec les caractéristiques de l'une des revendications précédentes, avec les étapes de procédé :
charge du condensateur d'énergie d'impulsion (33) jusqu'à ce que la tension de condensateur réelle (U) atteigne la valeur de tension cible de charge (Ut), arrêt de l'action de charge, et
au moment où la tension de condensateur électrique réelle descendante (U) est égale à la valeur de tension d'allumage mémorisée (Ui) : fermeture du commutateur d'allumage d'impulsion (36) par le déclencheur d'allumage de front descendant (42) pour initier ainsi une impulsion de lumière photométrique générée par la source de lumière de flash (61).
